# EUROPEAN PATENT APPLICATION

(11) **EP 1 806 382 A1**
(43) Date of publication of application: **11.07.2007**
(21) Application number: 05788130.2
(22) Date of filing: 28.09.2005
(51) Int. Cl.: C08L 51/08, C08J 3/215, C08L 25/08

(54) **MODIFIER FOR STYRENE RESIN, STYRENE RESIN COMPOSITION, AND PROCESS FOR PRODUCING MODIFIER**

(30) Priority: 13.10.2004 JP 2004299174
(71) Applicant: Kaneka Corporation, Kita-ku Osaka-shi, Osaka 530-8288 (JP)
(72) Inventor: OCHIKOSHI, Shinobu, Takasago-shi, Hyogo 6760023 (JP); SHIBATA, Takao, Himeji-shi, Hyogo 6700954 (JP)
(74) Representative: Vossius & Partner
(86) International application number: PCT/JP2005/017831
(87) International publication number: WO 2006/040929

(57) **Abstract**

An object of the present invention is to provide a modifier for styrene resins that has excellent powder characteristics and that can provide a styrene resin composition for a styrene resin having high impact resistance and formability when the modifier is contained in a small amount.

A modifier (C) for styrene resins that has improved powder characteristics can be obtained by mixing, in advance or in advance in latex form, 1 to 400 parts by weight of a styrene copolymer (B) with 100 parts by weight of a polyorganosiloxane-containing graft copolymer (A) having a polyorganosiloxane backbone produced by polymerizing an organosiloxane and a grafting agent, and then granulating the resulting mixture. Thus, the above-described object can be achieved.

## Description

### Technical Field

The present invention relates to a modifier having excellent powder characteristics and capacity to significantly improve the impact resistance of styrene resins, a styrene resin composition, and a process for producing the modifier.

### Background Art

Styrene resins, in particular, acrylonitrile-butadiene-styrene (ABS) resins are used in a variety of fields including general merchandise, interior and exterior materials for automobiles, housings of home electric appliances such as rice cookers and microwave ovens, housings for office appliances such as components, telephones, and facsimile machines, and components, owing to their high impact resistance, heat resistance, stiffness, processability, etc.

Recent years have seen the development of AAS resins produced by changing the rubber component of the ABS resin from a butadiene rubber having double bonds unstable under light and heat to an acrylic rubber substantially free of double bond to overcome the problem of low weather resistance of the ABS resin. However, the acrylic rubber has a drawback in that the impact resistance is not easily yielded compared to the butadiene rubber.

Meanwhile, a technique of adding an organic silicone oil to a composition containing a particular acrylic rubber and/or a silicone rubber has been proposed (e.g., refer to Patent Document 1). However, this conventional process of adding the silicone oil has a problem in that the impact resistance is low when the amount of the silicone oil added is small and the processability is low when the amount of the silicone oil added is large.

Also, a technique of adding a polyorganosiloxane-containing graft copolymer (e.g., refer to Patent Document 2) has been proposed as a method for improving the secondary processability of styrene resins. However, when the polyorganosiloxane content in the polyorganosiloxane-containing graft copolymer is high, it becomes difficult to obtain the graft copolymer in powder form. When such a copolymer is added to a resin, the appearance and the impact resistance are degraded.
[Patent Document 1] Japanese Unexamined Patent Application Publication No. 2001-31830
[Patent Document 2] Japanese Unexamined Patent Application Publication No. 7-331025

### Disclosure of Invention

### Problems to be Solved by Invention

The present invention aims to overcome the above-described problems associated with the use of a polyorganosiloxane-containing graft copolymer and silicone oil and to provide a modifier for styrene resins that has improved powder characteristics, a styrene resin composition containing the modifier, and a process for producing the modifier.

The present inventors have conducted extensive researches and found that by preliminarily mixing a polyorganosiloxane-containing graft copolymer of a particular composition with a styrene copolymer and drying the resulting mixture, a modifier for styrene resins that has excellent power characteristics can be obtained. The present invention was made based on this finding.

In particular, a first aspect of the present invention relates to a modifier (C) for styrene resins, the modifier being obtained by mixing in advance 1 to 400 parts by weight of a styrene copolymer (B) with 100 parts by weight of a polyorganosiloxane-containing graft copolymer (A) having a polyorganosiloxane backbone produced by polymerizing an organosiloxane and a grafting agent, and then drying the resulting mixture.

A preferred embodiment relates to the modifier (C) for styrene resins described above, in which the polyorganosiloxane-containing graft copolymer (A) and the styrene copolymer (B) are both mixed in latex form.

Another preferred embodiment relates to the modifier (C) for styrene resins described above, wherein the content of the grafting agent in the polyorganosiloxane is 0.1 to 0.4 wt% for the total of 100 wt% of the organosiloxane and the grafting agent.

A second aspect of the present invention relates to a styrene resin composition including 0.1 to 6 wt% of the modifier (C) for styrene resins described above and 99.9 to 94 wt% of a styrene resin (D).

A third aspect of the present invention relates to a process for producing a modifier (C) for styrene resins, including mixing 1 to 400 parts by weight of a styrene copolymer (B) with 100 parts by weight of a polyorganosiloxane-containing graft copolymer (A) having a polyorganosiloxane backbone produced by polymerizing an organosiloxane and a grafting agent, being mixed both (A) and (B) in latex form, and then drying the resulting mixture.

A preferred embodiment relates to the process for producing the modifier (C) for styrene resins described above, in which the drying is conducted by spray drying.

### Effects of the Invention

The modifier (C) for styrene resins according to the present invention has excellent properties as a modifier for improving the impact resistance of a styrene resin and also has a powder characteristic such that, when the modifier is blended into a resin serving as a base material, the modifier can be handled as a powdery substance similar to the resin serving as the base material.

### Best Mode for Carrying Out the Invention

A polyorganosiloxane-containing graft copolymer (A) of the present invention is obtained by polymerizing a vinyl monomer (A-2) in the presence of a polyorganosiloxane (A-1), the total of (A-1) and (A-2) being 100 parts by weight.

The polyorganosiloxane (A-1) is the backbone polymer of the polyorganosiloxane-containing graft copolymer (A) of the present invention and is obtainable by polymerizing an organosiloxane.

The organosiloxane used for producing the polyorganosiloxane (A-1) of the polyorganosiloxane-containing graft copolymer (A) of the present invention has a structural unit represented by the general formula RₘSiO_{(4-m)/2} (R represents a substituted or unsubstituted monovalent hydrocarbon group and m represents an integer of 0 to 3) and may be linear, branched, or cyclic. Preferably, a cyclic organosiloxane is used. Examples of the substituted or unsubstituted monovalent hydrocarbon group of the organosiloxane include a methyl group, an ethyl group, a propyl group, a phenyl group, and substituted hydrocarbon groups obtained by substituting these groups with a cyano group or the like.

Examples of the organosiloxane include cyclic compounds such as hexamethylcyclotrisiloxane (D3), octamethylcyclotetrasiloxane (D4), decamethylcyclopentasiloxane (D5), dodecamethylcyclohexasiloxane (D6), and trimethyltriphenylcyclotrisiloxane; and linear and branched other organosiloxanes. These organosiloxanes may be used alone or in combination.

In preparing the polyorganosiloxane (A-1) of the polyorganosiloxane-containing graft copolymer (A) of the present invention by polymerization, a grafting agent or, if necessary, a cross-linking agent may be used.

The grafting agent used in the present invention is preferably an alkylalkoxysilane compound (wherein the alkyl and alkoxy groups each have 1 to 4 carbon atoms, and the number of carbon atoms in the alkyl group may be the same as or different from the number of carbon atoms in the alkoxy group) having two hydrolyzable silicon groups in a molecule. Examples thereof include allylsilane, vinylsilane, mercaptosilane, and methacrylsilane, such as p-vinylphenylmethyldimethoxysilane, p-vinylphenylethyldimethoxysilane, 2-(p-vinylphenyl)ethylmethyldimethoxysilane, 3-(p-vinylbenzoyloxy)propylmethyldimethoxysilane, p-vinylphenylmethyldimethoxysilane, vinylmethyldimethoxysilane, tetravinyltetramethylcyclosiloxane, allylmethyldimethoxysilane, γ-mercaptopropylmethyldimethoxysilane, and γ-methacryloxypropylmethyldimethoxysilane.

In particular, γ-mercaptopropylalkyldialkoxysilane and γ-methacryloxypropylalkyldialkoxysilane (wherein the alkyl and alkoxy groups each have 1 to 4 carbon atoms, and the number of carbon atoms in the alkyl group may be the same as or different from the number of carbon atoms in the alkoxy group) are preferable. From the standpoint of impact resistance, γ-mercaptopropylalkyldialkoxysilane (wherein the alkyl and alkoxy groups each have 1 to 4 carbon atoms, and the number of carbon atoms in the alkyl group may be the same as or different from the number of carbon atoms in the alkoxy group in the molecule), in particular, γ-mercaptopropylmethyldimethoxysilane, is preferable.

The amount of the grafting agent used is preferably 0.1 to 0.4 wt%, more preferably 0.1 to 0.35 wt%, and most preferably 0.15 to 0.3 wt% relative to the total of 100 wt% of the organosiloxane and the grafting agent. When the amount of the grafting agent is less than 0.1 wt%, it tends to be difficult to obtain the polyorganosiloxane-containing graft copolymer (A) in powder form. When the amount of the grafting agent exceeds 0.4 wt%, the impact resistance of a molded end product tends to decrease.

The polyorganosiloxane (A-1) content in 100 parts by weight of the polyorganosiloxane-containing graft copolymer (A) is preferably 70 to 90 parts by weight, more preferably 72 to 88 parts by weight, and most preferably 75 to 86 parts by weight (wherein the total of (A-1) and (A-2) is 100 parts by weight). At a polyorganosiloxane (A-1) content less than 70 parts by weight, the impact resistance of the molded end product tends to decrease. At a polyorganosiloxane (A-1) content exceeding 90 parts by weight, it tends to be difficult to obtain the polyorganosiloxane-containing graft copolymer (A) in powder form.

The polyorganosiloxane (A-1) in the polyorganosiloxane-containing graft copolymer (A) of the present invention is preferably produced by a method disclosed in the specification of U.S. Patent Nos. 2,891,920 or 3,294,725 or the like, i.e., a method of polymerizing (emulsion polymerization) an organosiloxane and a grafting agent in the presence of an emulsifier, such as alkylbenzenesulfonic acid. Here, the polymerization may be conducted after emulsification and dispersion in water by high speed shearing with a high-speed stirrer such as a homogenizer. Alkylbenzenesulfonic acid is preferable since it serves as an emulsifier for polyorganosiloxane and also as a polymerization initiator. The amount of the emulsifier used is usually 0.1 to 5 wt% and preferably 0.3 to 3 wt% for the total 100 wt% of the organosiloxane and the grafting agent. The polymerization temperature is usually 5°C to 100°C.

The vinyl monomer (A-2) in the polyorganosiloxane-containing graft copolymer (A) is a component for maintaining the compatibility between the polyorganosiloxane-containing graft copolymer (A) and a styrene resin (D) to thereby homogeneously disperse the polyorganosiloxane-containing graft copolymer (A) in a styrene resin.

Examples of the vinyl monomer (A-2) include (i) aromatic vinyl monomers such as styrene, α-methylstyrene, p-methylstyrene, p-butylstyrene, chlorostyrene, and bromostyrene; (ii) vinylcyanide monomers such as acrylonitrile and methacrylonitrile; (iii) (meth)acrylate monomers such as methyl acrylate, ethyl acrylate, propyl acrylate, butyl acrylate, 2-ethylhexyl acrylate, glycidyl acrylate, hydroxyethyl acrylate, methyl methacrylate, ethyl methacrylate, butyl methacrylate, lauryl methacrylate, glycidyl methacrylate, and hydroxyethyl methacrylate; (iv) carboxyl-containing vinyl monomers such as itaconic acid, (meth)acrylic acid, fumaric acid, and maleic acid; and (v) maleimide monomers such as maleimide, N-methylmaleimide, N-ethylmaleimide, N-propylmaleimide, N-butylmaleimide, N-phenylmaleimide, and N-(p-methylphenyl)maleimide. These may be used alone or in combination.

The content of the vinyl monomer (A-2) in the polyorganosiloxane-containing graft copolymer (A) of the present invention is 10 to 30 parts by weight, preferably 12 to 28 parts by weight, and most preferably 14 to 25 parts by weight (the total of (A-1) and (A-2) being 100 parts by weight). At a vinyl monomer (A-2) content less than 10 parts by weight, it tends to be difficult to obtain the polyorganosiloxane-containing graft copolymer (A) in powder form. At a vinyl monomer (A-2) content exceeding 30 parts by weight, the effect of improving the impact resistance of the final cured product tends to be low.

In the polyorganosiloxane-containing graft copolymer (A) of the present invention, the graft polymerization of the vinyl monomer (A-2) in the presence of the polyorganosiloxane (A-1) may be conducted by a typical emulsion polymerization.

The styrene copolymer (B) of the present invention, which is a component for improving the powder characteristics of the polyorganosiloxane-containing graft copolymer (A), also serves as a component for maintaining the compatibility between the polyorganosiloxane-containing graft copolymer and the styrene resin (D) described below and preventing the decrease in quality of the styrene resin (D). The styrene copolymer (B) is mainly composed of an aromatic vinyl monomer. Examples thereof include those monomers described above as examples of the vinyl monomer (A-2) in the polyorganosiloxane-containing graft copolymer (A).

The method for producing the styrene copolymer (B) of the present invention is not particularly limited and may be mass polymerization, suspension polymerization, or emulsion polymerization. Since the styrene copolymer (B) is preliminarily mixed with the polyorganosiloxane-containing graft copolymer (A) before the drying, the styrene copolymer (B) is preferably produced by the same polymerization method as that for the polyorganosiloxane-containing graft copolymer. When the polyorganosiloxane-containing graft copolymer is produced by the emulsion polymerization, the styrene copolymer (B) is also preferably produced by emulsion polymerization.

To 100 parts by weight of the polyorganosiloxane-containing graft copolymer (A), 1 to 400 parts by weight and preferably 20 to 350 parts by weight of the styrene copolymer (B) is preferably preliminarily mixed preferably in latex form to yield a modifier (C) for the styrene resin, the modifier (C) having improved powder characteristics.

At a styrene copolymer (B) content less than 1 part by weight, the resulting modifier becomes flaky and it is difficult to obtain the modifier in powder form. At a styrene copolymer (B) content exceeding 400 parts by weight, the inherent quality of the styrene resin (D) may be degraded if the styrene copolymer (B) has a composition different from the styrene resin (D). This problem does not occur when the styrene copolymer (B) and the styrene resin (D) have the same composition.

The modifier (C) is prepared by preliminarily mixing the polyorganosiloxane-containing graft copolymer (A) and the styrene copolymer (B) and drying the resulting mixture. The process for obtaining particles from the mixture is not particularly limited. For example, when the mixture is in latex form, particles may be obtained by a salting-out technique of adding an alkaline earth metal salt such as calcium chloride, magnesium chloride, or a magnesium sulfate to the mixed latex or by an alcohol coagulation technique of adding an alcohol to the mixed latex, and drying the particles. A method of spray-drying these particles or a mixed latex is also available. The method for drying is not particularly limited and may be fluidized drying, spray drying, or the like. Spray drying is more preferred. The salting-out technique and the alcohol coagulation technique require facility for storing a salting-out agent and a coagulant and facilities for conducting coagulation. The spray drying does not require such facilities and thus can be performed at a low facility cost.

The modifier (C) obtained thereby is blended with the styrene resin (D) to give high impact resistance to the styrene resin.

Examples of the styrene resin (D) include high impact polystyrene (HIPS); ABS resins composed of styrene-butadiene-acrylonitrile copolymer; heat-resistant ABS resins produced by partly or almost entirely replacing the styrene of the ABS resins with α-methylstyrene, maleimide, or the like; and heat-resistant AES resins or heat-resistant AAS resins produced by replacing the butadiene with ethylenepropylene rubber or polybutyl acrylate. These rubber-modified styrene resins may be used alone or in combination. Moreover, the rubber-modifed styrene resin may be combined with one or more of polycarbonates, polyamides, polybutylene terephthalate, polyethylene terephthalate, and the like.

From the standpoints of impact resistance and processability, the amount of the modifier (C) relative to styrene resin (D) is preferably 0.1 to 6 wt% for 99.9 to 94 wt% of the styrene resin (D), and is more preferably 0.1 to 1.8 wt% for 99.9 to 98.2 wt% of the styrene resin (D). At a modifier content less than 0.1 wt%, the effect of improving the impact resistance of the molded end product tends to decrease. At a content exceeding 6 wt%, the processability tends to decrease, for example, a black line may appear in the surface of the molded product.

The mixing of the styrene resin (D) with the modifier (C) may be conducted by mixing in a Henschel mixer, a ribbon blender, or the like and then kneading with a roller mill, a single-screw extruder, a twin-shaft extruder, a kneader, or the like.

At this stage, a common compounding agent, such as a pigment, a colorant, a heat stabilizer, an antioxidant, a plasticizer, a lubricant, a UV absorber, a photostabilizer, an antistatic agent, or the like may be adequately added if necessary.

As the method for molding the resin composition, a molding method used for molding a typical thermoplastic resin composition may be used. Examples thereof include injection molding, extrusion molding, blow molding, and calendar molding.

### EXAMPLES

The present invention will now be described by way of examples. The present invention is not limited to these examples. The evaluation methods in EXAMPLES and COMPARATIVE EXAMPLES are summarized below.

### [Polymerization Conversion Rate]

The latex obtained at the end of the polymerization was dried for one hour in a hot air dryer at 120°C to determine the solid content, and the polymerization conversion rate was calculated by 100 x solid content/amount of monomers fed (%).

### [Powder Characteristics by Salt Coagulation]

The polyorganosiloxane-containing graft copolymer latex (A) obtained by the same method as in PRODUCTION EXAMPLE 1 and the styrene copolymer (B) obtained by the same method as in PRODUCTION EXAMPLE 2 were mixed in latex form, coagulated with calcium chloride, heated to 95°C, dewatered, and dried to obtain the modifier (C). The state of powder of the modifier (C) was evaluated according to the following criteria:
Very good: Particle surfaces were not sticky, and satisfactory powder was obtained
Good: Although particle surfaces were a little sticky, powder was obtained
Not good: Particle surfaces were sticky, and a flaky substance was obtained
[Powder Characteristics by Spray Drying]

The latex of the polyorganosiloxane-containing graft copolymer (A) obtained by the method described in PRODUCTION EXAMPLE 1 and the latex of the styrene copolymer (B) obtained by the method described in PRODUCTION EXAMPLE 2 were mixed in latex form, and the modifier (C) was obtained using a spray drier (model L12, produced by Ohkawahara Kakohki Co., Ltd.). The state of powder and the state of adhesion of the powder onto the inner wall of the spray drier were evaluated according to the following criteria:
Very good: Particle surfaces were not sticky, and satisfactory powder was obtained
Good: Although particle surfaces were a little sticky, a powdery substance was obtained
Not good: Powder was not obtained, and the material adhered onto the inner wall of the spray drier

### [Impact Resistance]

The pellets of the resin composition obtained by the method described in PRODUCTION EXAMPLE 1 were processed with an injection molding machine (FAS-75D, produced by Fanuc Ltd.) at a cylinder temperature of 240°C to prepare a specimen having the shape of a 1/4-inch bar (127 x 12.7 x 6.35 (thickness) [mm]). The notched IZOD impact strength (unit: J/m) of the specimen at 23°C was determined according to the standard D-256 of American Society for Testing and Materials (ASTM).

### [Formability]

The pellets of the resin composition obtained by the method described in PRODUCTION EXAMPLE 1 were processed with an injection molding machine (FAS-100B, produced by Fanuc Ltd.) at a cylinder temperature of 240°C to continuously form twenty specimens each having the shape of a flat plate (100 x 150 [mm], thickness: 2 mm). The surface of each formed specimen was observed with eyes and evaluated based on the following criteria:
Good: No surface defect (black line) was observed in any of the twenty specimens Not good: Black-line surface defect was observed in one or more specimens

### (PRODUCTION EXAMPLE 1) Synthesis of Polyorganosiloxane-Containing Graft Copolymer (A)

Into a reactor equipped with a stirrer, a reflux condenser, a nitrogen inlet port, a monomer feeding port, and a thermometer, an emulsion prepared by agitating a mixture of 300 parts by weight of deionized water, 99.8 parts by weight of octamethylcyclotetrasiloxane, 0.2 part by weight of 3-mercaptopropyldimethoxymethylsilane, and 0.3 part by weight (solid content) of sodium dodecylbenzenesulfonate in a homomixer (model M produced by Tokushu Kika Kogyo) for 5 minutes at 7,000 rpm was fed in one step.

Then a 10 wt% aqueous solution of 1.5 parts by weight of dodecylbenzenesulfonic acid was added, and the system was heated to 80°C under nitrogen stream with stirring. The system was stirred for 10 hours at 80°C, cooled to 23°C, and allowed to stand for 20 hours. Subsequently, an aqueous sodium hydroxide solution was added, and the pH of the resulting latex was adjusted to 6.5 to terminate the polymerization. A polyorganosiloxane (A-1) latex was obtained as a result.

Into a reactor equipped with a stirrer, a reflux condenser, a nitrogen inlet port, a monomer feeding port, and a thermometer, 250 parts by weight of deionized water and 85 parts by weight (solid content) of the polyorganosiloxane (A-1) latex was fed, and the system was heated to 60°C under nitrogen stream with stirring. Upon reaching 60°C, 0.2 part by weight of sodium formaldehyde sulfoxylate, 0.01 part by weight of disodium ethylenediaminetetraacetate, and 0.0025 part by weight of ferrous sulfate (heptahydrate) were added to the system, and then a mixture of 3.8 parts by weight of acrylonitrile, 11.2 parts by weight of styrene, and 0.02 part by weight of cumen hydroperoxide was added dropwise over 1.5 hours. After the completion of the addition, the stirring was continued for two hours to obtain a polyorganosiloxane-containing graft copolymer (A) latex. The polymerization conversion rate was 99%.

### (PRODUCTION EXAMPLE 2) Synthesis of Styrene Copolymer (B)

To a reactor equipped with a stirrer, a reflux condenser, a nitrogen inlet port, a monomer feeding port, and a thermometer, 250 parts by weight of deionized water and 1 part by weight of sodium dioctylsulfosuccinate were fed, and the system was heated to 60°C under nitrogen stream with stirring. Upon reaching 60°C, 0.15 part by weight of sodium formaldehyde sulfoxylate, 0.01 part by weight of disodium ethylenediaminetetraacetate, and 0.0125 part by weight of ferrous sulfate (heptahydrate) were added to the system, and then a mixture of 71 parts by weight of styrene, 29 parts by weight of acrylonitrile, and 0.15 part by weight of cumen hydroperoxide was added dropwise over 6 hours. Upon completion of the addition, the stirring was continued for 2 hours to obtain a styrene copolymer (B) latex. The polymerization conversion rate was 99%.

### (PRODUCTION EXAMPLE 3) Synthesis of Styrene Resin (D)

Into a 100 L pressure polymerization vessel, 200 parts by weight of deionized water was fed. After the vessel was deaerated and purged with nitrogen, 100 parts by weight of butadiene, 0.3 part by weight of potassium rosinate, 0.1 part by weight of sodium rosinate, 0.05 part by weight of sodium carbonate, and 0.2 part by weight of potassium persulfate were fed. The polymerization was initiated by heating the system to 60°C and terminated after 30 hours. The polymerization conversion rate of the resulting diene rubber polymer was 95%.

To a reactor equipped with a stirrer, a reflux condenser, a nitrogen inlet port, a monomer feeding port, and a thermometer, 250 parts by weight of deionized water and 70 parts by weight (solid content) of the diene rubber polymer latex were fed, and the system was heated to 65°C under nitrogen stream with stirring. To the system, 0.2 part by weight of sodium formaldehyde sulfoxylate, 0.01 part by weight of disodium ethylenediaminetetraacetate, and 0.0025 part by weight of ferrous sulfate (heptahydrate) were added, and then a mixture of 7.5 parts by weight of acrylonitrile, 22.5 parts by weight of styrene, and 0.3 part by weight of cumen hydroperoxide was continuously added dropwise over 5 hours. Upon completion of the addition, the system was stirred for 2 hours at 65°C and the polymerization was terminated to obtain a diene rubber-containing graft copolymer (d-1) latex. The polymerization conversion rate was 98%.

Meanwhile, to a reactor equipped with a stirrer, a reflux condenser, a nitrogen inlet port, a monomer feeding port, and a thermometer, 250 parts by weight of deionized water and 0.5 part by weight (solid content) of sodium palmitate were fed, and the system was heated to 70°C under nitrogen stream with stirring. Upon reaching 70°C, 0.4 part by weight of sodium formaldehyde sulfoxylate, 0.01 part by weight of disodium ethylenediaminetetraacetate, and 0.0025 part by weight of ferrous sulfate (heptahydrate) were added, and then a mixture of 29 parts by weight of acrylonitrile, 71 parts by weight of styrene, 0.2 part by weight of cumen hydroperoxide, and 0.4 part by weight of tert-dodecylmercaptan was continuously added dropwise over 8 hours, during which 0.5 part by weight (solid content) of sodium palmitate was respectively added at after 1.5 hours and at after 3 hours. Upon completion of the addition, the system was stirred at 70°C for 2 hours, and the polymerization was terminated to obtain a polymer (d-2) latex. The polymerization conversion rate was 98%.

The diene rubber-containing graft copolymer (d-1) latex and the polymer (d-2) latex obtained as such were mixed at a ratio of 20:80 (solid content on a weight basis). A 5 wt% aqueous solution of 3 parts by weight of calcium chloride per 100 parts by weight of the solid content was added to obtain a coagulation slurry. The coagulation slurry was heated to 95°C, cooled to 50°C, dewatered, and dried in a drier at 50°C for 3 days to obtain a powdery styrene resin (D).

### (EXAMPLES 1 to 5)

The polyorganosiloxane-containing graft copolymer (A) and the styrene copolymer (B) were mixed in latex form at weight ratios (in terms of solid) shown in Table 1. To 100 parts by weight of the solid content, a 5 wt% aqueous solution of 3 parts by weight of calcium chloride was added to obtain a coagulation slurry. The coagulation slurry was heated to 95°C, cooled to 50°C, dewatered, and dried at 50°C for three days to prepare the modifier (C) for the styrene resin. The powder characteristics of the modifier were evaluated. The results are shown in Table 1.

### (COMPARATIVE EXAMPLE 1)

The polyorganosiloxane-containing graft copolymer (A) was granulated and dried as in EXAMPLES 1 to 5 as shown in Table 1. The powder characteristics were evaluated. The results are shown in Table 1.

**Table 1**

| | EXAMPLE 1 | EXAMPLE 2 | EXAMPLE 3 | EXAMPLE 4 | EXAMPLE 5 | COMPARATIVE EXAMPLE 1 |
|---|---|---|---|---|---|---|
| Polyorganosiloxane-containing graft copolymer (A) | 100 | 100 | 100 | 100 | 100 | 100 |
| Styrene copolymer (B) | 10 | 50 | 100 | 200 | 300 | 0 |
| Modifier (C) | C-1 | C-2 | C-3 | C-4 | C-5 | |
| Powder characteristics by salt coagulation | Good | Very good | Very good | Very good | Very good | Not good |

### (EXAMPLES 6 to 10)

The polyorganosiloxane-containing graft copolymer (A) and the styrene copolymer (B) were mixed in latex form at ratios (in terms of solid) shown in Table 2. Each resulting mixture was dried in a spray drier (model L12, produced by Ohkawahara Kakohki Co., Ltd.) to prepare the modifier (C) for styrene resin. The powder characteristics were evaluated. The results are shown in Table 2. The spray drying was conducted by spraying a mixture latex having its concentration adjusted to 28 wt% toward hot air at 100°C at a flow of 130 cclmin and an atomizer revolution of 13,000 rpm.

### (COMPARATIVE EXAMPLE 2)

As shown in Table 2, the polyorganosiloxane-containing graft copolymer (A) was granulated by spray drying as in EXAMPLES 6 to 10, and the powder characteristics were evaluated. The results are shown in Table 2.

**Table 2**

| | EXAMPLE 6 | EXAMPLE 7 | EXAMPLE 8 | EXAMPLE 9 | EXAMPLE 10 | COMPARATIVE EXAMPLE 2 |
|---|---|---|---|---|---|---|
| Polyorganosiloxane-containing graft copolymer (A) | 100 | 100 | 100 | 100 | 100 | 100 |
| Styrene copolymer (B) | 10 | 50 | 100 | 200 | 300 | 0 |
| Modifier (C) | C-1 | C-2 | C-3 | C-4 | C-5 | |
| Powder characteristics by spray drying | Good | Very good | Very good | Very good | Very good | Not good |

### (EXAMPLES 11 to 16)

As shown in Table 3, to the total of 100 parts by weight of one of modifiers (C-1 to C-5) for styrene resins prepared in EXAMPLES 1 to 5 and the styrene resin (D), 1 part of ethylenebisstearylamide and 0.2 part by weight of a phenol antioxidant (AO-20 produced by Asahi Denka Co., Ltd.) were added, and the mixture was blended by stirring in a Henschel mixer (SMV-20 produced by Kawata Mfg Co. Ltd.) for 5 minutes. Pellets of the resin composition were made by melt kneading in a vented single-screw extruder (HV-40-28 produced by Tabata Co., Ltd.) at a cylinder temperature of 230°C. The pellets were processed with an injection molding machine (FAS-75D, produced by Fanuc Ltd.) at a cylinder temperature of 240°C to make required specimens by injection molding. The impact resistance and the formability of the specimens were evaluated. The results are shown in Table 3.

### (COMPARATIVE EXAMPLE 3)

As shown in Table 3, only the styrene resin (D) (100 parts by weight) was used to make pellets as in EXAMPLES 11 to 16, and subsequently injection molding was performed to prepare specimens. The impact resistance and the formability were evaluated. The results are shown in Table 3.

### (COMPARATIVE EXAMPLE 4)

The modifier (C-3) for the styrene resin prepared in EXAMPLE 3 and the styrene resin (D) were mixed in parts by weight shown in Table 3, and pellets were made as in EXAMPLES 11 to 16. Subsequently, specimens were made by injection molding. The impact resistance and the formability were evaluated. The results are shown in Table 3.

### (COMPARATIVE EXAMPLE 5)

Pellets were made as in EXAMPLES 11 to 16 except that silicone oil (SH-200 (viscosity: 10,000 cSt) produced by Dow Coming Toray Co., Ltd.) was used instead of the polyorganosiloxane-containing graft copolymer (A). Specimens were made by injection molding, and the impact resistance and the formability were evaluated. The results are shown in Table 3.

**Table 3**

| | | EXAMPLE 11 | EXAMPLE 12 | EXAMPLE 13 | EXAMPLE 14 | EXAMPLE 15 | EXAMPLE 16 | COMPARATIVE EXAMPLE 3 | COMPARATIVE EXAMPLE 4 | COMPARATIVE EXAMPLE 5 |
|---|---|---|---|---|---|---|---|---|---|---|
| Modifier (C) | C-1 | 0.3 | | | | | | | | |
| | C-2 | | 0.3 | | | | | | | |
| | C-3 | | | 0.3 | | | 1 | | 10 | |
| | C-4 | | | | 0.3 | | | | | |
| | C-5 | | | | | 0.3 | | | | |
| Styrene resin (D) | | 99.7 | 99.7 | 99.7 | 99.7 | 99.7 | 99 | 100 | 90 | 99 |
| Silicone oil | | | | | | | | | | 1 |
| IZOD strength (J/m) | | 255 | 250 | 245 | 240 | 230 | 245 | 162 | 260 | 250 |
| Formability | | Good | Good | Good | Good | Good | Good | Good | Not good | Not good |

The above-described results show that the present invention provides a modifier having satisfactory powder characteristics and high impact resistance and formability, and a styrene resin composition.

## Claims

1. A modifier (C) for styrene resins, the modifier being obtained by mixing in advance 1 to 400 parts by weight of a styrene copolymer (B) with 100 parts by weight of a polyorganosiloxane-containing graft copolymer (A) having a polyorganosiloxane, as a backbone polymer, produced by polymerizing an organosiloxane and a grafting agent, and then drying the resulting mixture.

2. The modifier (C) for styrene resins according to claim 1, wherein the polyorganosiloxane-containing graft copolymer (A) and the styrene copolymer (B) are both mixed in latex form.

3. The modifier (C) for styrene resins according to claim 1 or 2, wherein the content of the grafting agent in the polyorganosiloxane is 0.1 to 0.4 wt% for the total of 100 wt% of the organosiloxane and the grafting agent.

4. A styrene resin composition comprising 0.1 to 6 wt% of the modifier (C) for styrene resins according to any one of claims 1 to 3, and 99.9 to 94 wt% of a styrene resin (D).

5. A process for producing a modifier (C) for styrene resins, comprising mixing 1 to 400 parts by weight of a styrene copolymer (B) with 100 part by weight of a polyorganosiloxane-containing graft copolymer (A) having a polyorganosiloxane, as a backbone polymer, produced by polymerizing an organosiloxane and a grafting agent, being mixed both (A) and (B) in latex form, and then drying the resulting mixture.

6. The process for producing the modifier (C) for styrene resins according to claim 5, wherein the drying is conducted by spray drying.
